# EUROPEAN PATENT APPLICATION

(11) **EP 4 451 052 A1**
(43) Date of publication of application: **23.10.2024**
(21) Application number: 22906667.5
(22) Date of filing: 15.12.2022
(51) Int. Cl.: G02F 1/161

(54) **ELECTROCHROMIC DEVICE**

(30) Priority: 17.12.2021 CN 202111549465; 17.12.2021 CN 202123200275 U; 21.01.2022 CN 202210072845
(71) Applicant: Guangyi Intelligent Tech (Suzhou) Co., Ltd., Suzhou, Jiangsu 215000 (CN)
(72) Inventor: HU, Guoyang, Suzhou, Jiangsu 215000 (CN); LIANG, Jinghao, Suzhou, Jiangsu 215000 (CN); LIU, Zhenzhao, Suzhou, Jiangsu 215000 (CN); PENG, Jingjun, Suzhou, Jiangsu 215000 (CN)
(74) Representative: MERH-IP Matias Erny Reichl Hoffmann Patentanwälte PartG mbB
(86) International application number: PCT/CN2022/139402
(87) International publication number: WO 2023/109922

(57) **Abstract**

An electrochromic device (100) includes: a first conductive base (110), an electrochromic layer (120) and a second conductive base (130) sequentially laminated; an edge of the first conductive base (110) is provided with a first accommodating groove (113), an edge of the second conductive base (120) is provided with a second accommodating groove (133), and an edge of the electrochromic layer (130) is provided with two or more third accommodating grooves (121); an orthographic projection of the first accommodating groove (113) on a plane where the electrochromic layer (120) is located overlaps with the third accommodating grooves (121), and the first accommodating groove (110) is communicated with the third accommodating grooves (121) to form a first concave groove (140); an orthographic projection of the second accommodating groove (133) on a plane where the electrochromic layer (120) is located overlaps with the third accommodating grooves (121), and the second accommodating groove (133) is communicated with the third accommodating grooves (121) to form a second concave groove (150); and the edge of the second conductive base (130) is provided with a first barrier structure, and the edge of the first conductive base (110) is provided with a second barrier structure. By using the first and second barrier structures, a barrier is formed between the first conductive base (110) and the second conductive base (130), thereby improving the stability of the electrochromic device (100).

## Description

### CROSS REFERENCE TO RELATED APPLICATION

The present application claims priorities of a Chinese Patent Application, with Application No. 202111549465.9, submitted to CNIPA on December 17, 2021, entitled "electrochromic device", a Chinese Patent Application, with Application No. 202123200275.4, submitted to CNIPA on December 17, 2021, entitled "electrochromic device", and a Chinese Patent Application, with Application No. 202210072845.6, submitted to CNIPA on January 21, 2022, entitled "electrochromic device"; the contents of which are incorporated in the present application by reference.

### TECHNICAL FIELD

The present application relates to the field of electrochromism, and more particularly to an electrochromic device.

### BACKGROUND

The existing electrochromic devices, due to the low hardness of the conductive layer ITO (Indium tin oxide, Indium tin oxide) and solid electrolyte, are subjected to compression during subsequent preparation processes (such as glass autoclave packaging), causing deformation at the edges of the conductive layer and electrolyte, which results in contact between the conductive layers on both sides and leads to short circuits in the electrochromic devices.

### SUMMARY

In view of this, the object of the present application is to overcome the shortcomings in existing technology and provide an electrochromic device.

The technical solution proposed in the present application is to provide an electrochromic device, which includes: a first conductive base, an electrochromic layer and a second conductive base sequentially laminated; an edge of the first conductive base is provided with a first accommodating groove, an edge of the second conductive base is provided with a second accommodating groove, and an edge of the electrochromic layer is provided with a plurality of third accommodating grooves; an orthographic projection of the first accommodating groove on a plane where the electrochromic layer is located overlaps with the plurality of third accommodating grooves, and the first accommodating groove is communicated with the third accommodating grooves to form a first concave groove; an orthographic projection of the second accommodating groove on a plane where the electrochromic layer is located overlaps with the plurality of third accommodating grooves, and the second accommodating groove is communicated with the third accommodating grooves to form a second concave groove; and the edge of the second conductive base is provided with a first barrier structure, and the edge of the first conductive base is provided with a second barrier structure.

The present application can achieve the support or partition effect on the edge structure of the conductive base by providing the barrier structure at the edge of the conductive base, the contact between sides of the edges of the conductive base due to external pressure or high temperature, etc. can be avoided, that is, the contact between the side of the edge of the first conductive base and the second conductive base can be avoided, and/or the contact between the side of the edge of the second conductive base and the first conductive base can be avoided, and/or the contact between the side of the edge of the first conductive base and the side of the edge of the second conductive base can be avoided, so as to prevent short circuits from occurring and to improve the stability and reliability of the electrochromic device.

In order to make the above objects, features, and advantages of the present application more obvious and understandable, the following text will provide preferred embodiments, and together with the attached drawings, provide a detailed explanation as follows.

### BRIEF DESCRIPTION OF THE DRAWINGS

In order to provide a clearer explanation of the technical solution of the embodiment of the present application, a brief introduction will be made to the accompanying drawings required in the embodiments. It should be understood that the following drawings only illustrate certain embodiments of the present application, and therefore should not be regarded as limiting the scope. For those skilled in the art, other relevant drawings can be obtained based on these drawings without creative labor.
FIG. 1 (a) shows a structural schematic diagram of an electrochromic device provided in some embodiments of the present application from one perspective;
FIG. 1 (b) shows a structural schematic diagram of an electrochromic layer provided in some embodiments of the present application from one perspective;
FIG. 1 (c) shows a structural schematic diagram of a first conductive base provided in some embodiments of the present application from one perspective;
FIG. 1 (d) shows a structural schematic diagram of a second conductive base provided in some embodiments of the present application from one perspective;
FIG. 2 shows a second structural schematic diagram of an electrochromic device provided in some embodiments of the present application from one perspective;
FIG. 3 shows an enlarged view of Part A in FIG. 2;
FIG. 4 shows a third structural schematic diagram of an electrochromic device provided in some embodiments of the present application from one perspective;
FIG. 5 shows the sectional view along an A-A direction in FIG. 4;
FIG. 6 shows an enlarged view of part B1 in FIG. 4;
FIG. 7 shows an enlarged view of part B2 in FIG. 5;
FIG. 8 shows a fourth structural schematic diagram of an electrochromic device provided in some embodiments of the present application from one perspective;
FIG. 9 shows an enlarged view of part B3 in FIG. 8;
FIG. 10 shows a fifth structural schematic diagram of an electrochromic device provided in some embodiments of the present application from one perspective;
FIG. 11 shows an enlarged view of part B4 in FIG. 10;
FIG. 12 shows a sixth structural schematic diagram of an electrochromic device provided in some embodiments of the present application from one perspective;
FIG. 13 shows an enlarged view of part B5 in FIG. 12;
FIG. 14 shows a seventh structural schematic diagram of an electrochromic device provided in some embodiments of the present application from one perspective;
FIG. 15 shows an enlarged view of part B6 in FIG. 14.

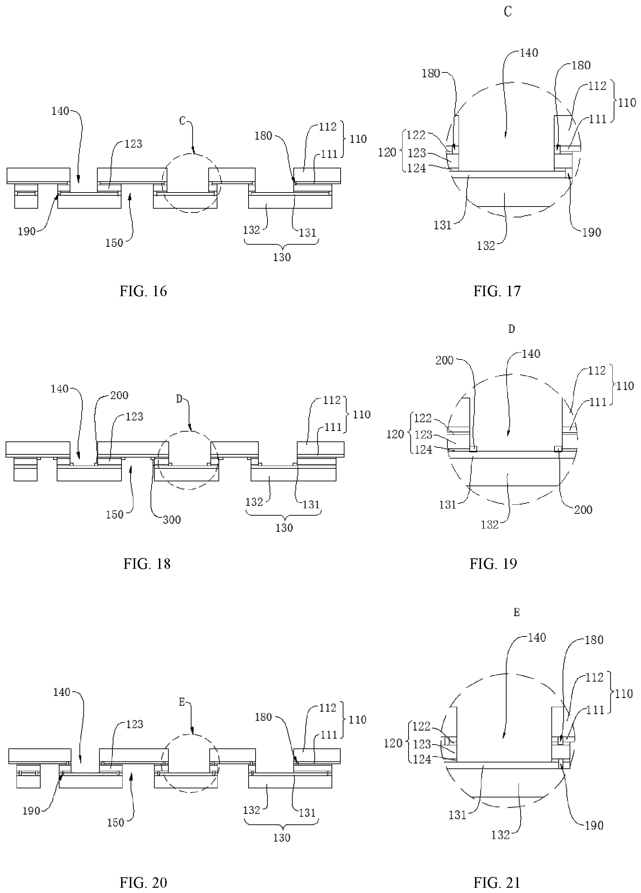

FIG. 16 shows an eighth structural schematic diagram of an electrochromic device provided in some embodiments of the present application from one perspective;
FIG. 17 shows an enlarged view of part C in FIG. 16;
FIG. 18 a ninth structural schematic diagram of an electrochromic device provided in some embodiments of the present application from one perspective;
FIG. 19 shows an enlarged view of part D in FIG. 18;
FIG. 20 a tenth structural schematic diagram of an electrochromic device provided in some embodiments of the present application from one perspective; and
FIG. 21 shows an enlarged view of part E in FIG. 20.

### Description of reference signs of main elements:

100-electrochromic devices; 110-first conductive base; 113-first accommodating groove; 111- first conductive layer; 112-first base layer; 120-electrochromic layer; 121-third accommodating groove; 122-electrochromic material layer; 123-electrolyte layer; 124-ion storage layer; 130-second conductive base; 133-second accommodating groove; 131-second conductive layer; 132-second base layer; 140-first concave groove; 150-second concave groove; 160-first barrier portion; 170-second barrier portion; 180-first etching area; 190-second etching area; 200-first insulating portion; 300-second insulating portion; 400-first partition region; 500-second partition region; 600-overlapping area.

### DETAILED DESCRIPTION OF EMBODIMENTS

Herein, embodiments of the present application are described in detail, and examples of the embodiment are illustrated in the accompanying figures; wherein, an always unchanged reference number or similar reference numbers represent(s) identical or similar components or components having identical or similar functionalities. The embodiment described below with reference to the accompanying figures is illustrative and intended to illustrate the present application, but should not be considered as any limitation to the present application.

It should be noted that when a component is referred to as "fixed to" another component, it can be directly attached to another component or there can be an intermediate component. When a component is considered to be "connected" to another component, it can be directly connected to another component or there may be an intermediate component present simultaneously. On the contrary, when a component is referred to as "directly on" another component, there is no intermediate component. The terms "vertical", "horizontal", "left", "right", and similar expressions used in this article are for illustrative purposes only.

In the present application, unless there is additional explicit stipulation and limitation, terms such as "mount", "connect with each other", "connect", "fix", and so on should be generalizedly interpreted, for example, "connect" can be interpreted as being fixedly connected, detachably connected, or connected integrally; "connect" can also be interpreted as being mechanically connected or electrically connected; "connect" can be further interpreted as being directly connected or indirectly connected through intermediary, or being internal communication between two components or an interaction relationship between the two components. For the one of ordinary skill in the art, the specific meanings of the aforementioned terms in the present application can be interpreted according to specific conditions.

In addition, terms "the first" and "the second" are only used in describe purposes, and should not be considered as indicating or implying any relative importance, or impliedly indicating the number of indicated technical features. As such, technical feature(s) restricted by "the first" or "the second" can explicitly or impliedly comprise one or more such technical feature(s). In the description of the present application, "a plurality of" means two or more, unless there is additional explicit and specific limitation.

Unless otherwise defined, all technical and scientific terms used in the article have the same meanings as those commonly understood by those skilled in the technical field of the present application. The terms used in the template specification in the present application are only for the purpose of describing specific embodiments and are not intended to limit the present application. The term "and/or" used in the present application includes any and all combinations of one or more related listed items.

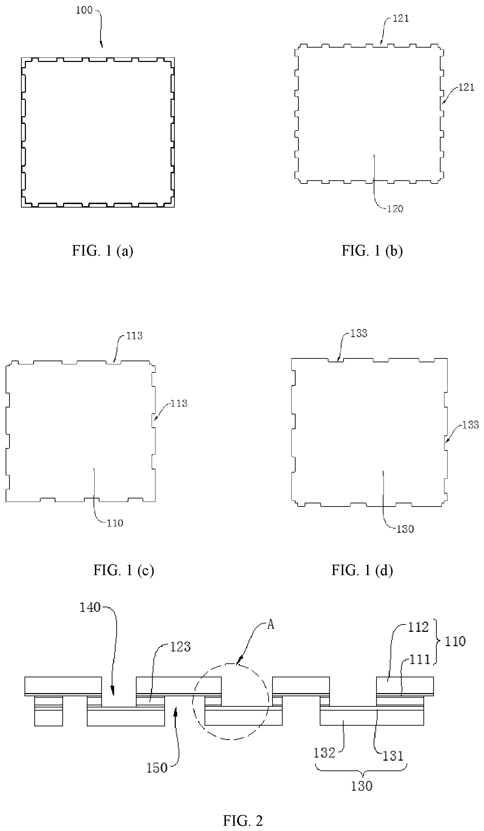

As shown in FIG. 1(a)-(d) and FIG. 2, some embodiments of the present application provide an electrochromic device, which is mainly used in the electrochromic field. The electrochromic device 100 includes a first conductive base 110, an electrochromic layer 120 and a second conductive base 130 sequentially laminated. It should be noted that the first conductive base 110 and the second conductive base 130 are completely covered on the electrochromic layer 120.

In the embodiment, a first accommodating groove 113 is provided at the edge of the first conductive base 110, a second accommodating groove 133 is provided at the edge of the second conductive base 130, and a third accommodating groove 121 is provided at the edge of the electrochromic layer 120. It should be noted that the number of the first accommodating groove 113, the second accommodating groove 133 and the third accommodating groove 121 can be one, two or more arbitrary numbers, which can be set according to the actual situation.

Specifically, the orthographic projection of each first accommodating groove 113 on the plane where the electrochromic layer 120 is located overlaps with one of the third accommodating grooves 121 respectively , and one first accommodating groove 113 is communicated with one third accommodating groove 121 to form a first concave groove 140. The orthographic projection of each second accommodating groove 133 on the plane where the electrochromic layer 120 is located overlaps with one of the third accommodating grooves 121 respectively, and one second accommodating groove 133 is communicated with one third accommodating groove 121 to form a second concave groove 150.

It should be noted that the orthographic projections of the first accommodating groove 113 and the second accommodating groove 133 on the plane where the electrochromic layer 120 is located form groove structures spaced apart from each other and alternatively arranged, and are coincided with the third accommodating grooves 121.

It is understood that the sum of the number of the first accommodating groove 113 and the number of the second accommodating groove 133 is equal to the number of the third accommodating grooves 121.

Therefore, it can be applied to an electrochromic device with a plurality of electrodes to improve the electrical conduction efficiency of the electrochromic device, thereby improving the color-changing efficiency of the device.

Further, the edge of the second conductive base is provided with a first barrier structure, and the inner wall of the first concave groove and the side of the second conductive base adjacent to the electrochromic layer are blocked by the first barrier structure, so as to avoid the occurrence of a short circuit when the side of the first conductive base or the electrochromic layer away from the second conductive base contacts the side of the second conductive base adjacent to the electrochromic layer when the electrochromic device is bent. Thus, the stability of electrochromic devices is improved.

At the same time, the edge of the first conductive base is provided with a second barrier structure, and the inner wall of the second concave groove and the side of the first conductive base adjacent to the electrochromic layer are blocked by the second barrier structure, so as to avoid short circuit when the side of the second conductive base or the electrochromic layer away from the first conductive base contacts the side of the first conductive base adjacent to the electrochromic layer. Thus, the stability of electrochromic devices is improved.

In addition, in some embodiments of the present application, a first concave groove can be etched at the edge of the first conductive layer, and a second concave groove can be etched at the edge of the second conductive layer, so that the external power supply can be connected to the first conductive layer by passing through the first concave groove, and connected to the second conductive layer by passing through the second concave groove to avoid a short circuit between the first conductive layer and the second conductive layer.

As shown In the FIGS, in some embodiments of the present application, a plurality of first accommodating grooves are provided, and the plurality of first accommodating grooves are spaced apart from each other on the edge of the first conductive base. It should be noted that each side of the edge of the first conductive base 110 are respectively provided with a plurality of first accommodating grooves 113 spaced apart from each other.

In some embodiments of the present application, a plurality of second accommodating grooves are provided, and the plurality of second accommodating grooves are spaced apart from each other on the edge of the second conductive base. It should be noted that each side of the edge of the second conductive base 130 are respectively provided with a plurality of second accommodating grooves 133 spaced apart from each other.

In addition, a plurality of third accommodating grooves are provided, and the plurality of third accommodating grooves are spaced apart from each other on the edge of the electrochromic layer. It should be noted that each side of the edge of the electrochromic layer 120 are respectively provided with a plurality of third accommodating grooves 121 spaced apart from each other.

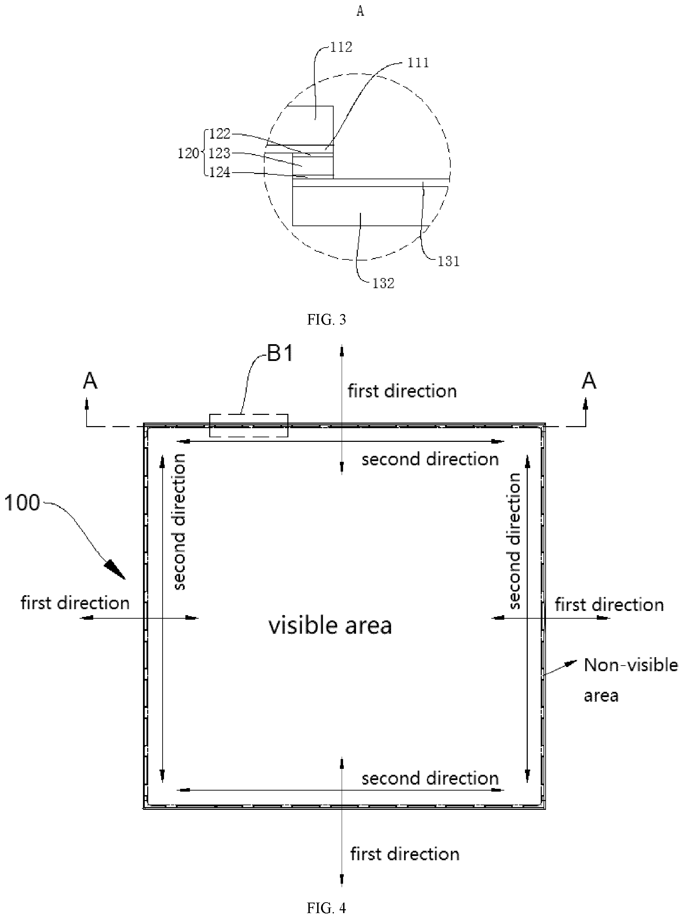

As shown in FIG. 3, in some embodiments of the present application, the first conductive base 110 includes a first conductive layer 111 and a first base layer 112 that are laminated, and the first base layer 112 is laminated on the side of the first conductive layer 111 away from the electrochromic layer 120. It should be noted that the first base layer 112 is completely covered on the first conductive layer 111.

The second conductive base 130 includes a second conductive layer 131 and a second base layer 132 that are laminated, and the second base layer 132 is laminated on the side of the second conductive layer 131 away from the electrochromic layer 120, and the second base layer 132 is completely covered on the second conductive layer 131.

In the embodiment, the hardness of the first conductive layer 111 of the first conductive base 110 and/or the hardness of the second conductive layer 131 of the second conductive base 130 is/are not less than a first hardness value. It should be noted that the hardness of each of the first conductive layer 111 and the second conductive layer 131 is not less than the first hardness value, and the first hardness value can be in the range of 2H~6H. In some examples, a gap is provided between the orthographic projection of the first accommodating groove 113 on the plane where the second conductive base 130 is located and the second accommodating groove 133, in which case the hardness of the first conductive layer 111 can be not less than 3H. In other examples, the orthographic projection of the first accommodating groove 113 on the plane where the second conductive base 130 is located overlaps with the second accommodating groove 133, in which case the hardness of the first conductive layer 111 can be not less than 5H.

By increasing the hardness of the first conductive layer and the second conductive layer, the bending heights of the first conductive layer and the second conductive layer under pressure are reduced, so as to avoid the short circuit of the contact between the first conductive layer and the second conductive layer when the electrochromic device is bent under pressure, so as to improve the stability of the electrochromic device.

In some embodiments of the present application, the first hardness value is 3H. It should be noted that in the present application, H is used to represent surface hardness, where the ability of a material to locally resist the pressing of a hard object into its surface is called the hardness.

By increasing the hardness of the first conductive layer and/or the second conductive layer, the bending heights of the first conductive layer and the second conductive layer are reduced, and the deformation that occurs when the first conductive layer and the second conductive layer are under pressure is reduced, so as to avoid the short circuit of the contact between the first conductive layer and the second conductive layer due to the deformation of the first conductive layer and/or the second conductive layer under pressure. Thus, the probability of short circuit of the electrochromic device is reduced and the stability of the electrochromic device is improved.

In addition, as shown in FIG. 3, the electrochromic layer 120 includes an electrochromic material layer 122, an electrolyte layer 123 and an ion storage layer 124 that are sequentially laminated, and the electrochromic material layer 122 and the ion storage layer 124 are completely covered on the electrolyte layer 123, respectively.

In some embodiments of the present application, the thickness of the electrolyte layer 123 is not less than the sum of the bending height of the side of the first conductive layer 111 adjacent to the first concave groove 140 and the bending height of the side of the second conductive layer 131 adjacent to the second concave groove 150.

It should be noted that the bending height of the side of the first conductive layer 111 adjacent to the first concave groove 140 refers to the displacement height when the first conductive layer 111 located on the inner wall of the first concave groove 140 bends to the second conductive layer 131 and contacts the second conductive layer 131. The bending height of the side of the second conductive layer 131 adjacent to the second concave groove 150 refers to the displacement height when the second conductive layer 131 located on the inner wall of the second concave groove 150 bends towards the first conductive layer 111 and contacts the first conductive layer 111.

Specifically, in some embodiments, if the thickness of the electrolyte is 10 µm, the probability of short circuit is approximately 100%, and the short circuit current of the device is approximately 50mA. When the thickness of the electrolyte is 20 µm, the probability of short circuit is 20%, and the short circuit current of the device is approximately 10mA. When the electrolyte thickness is adjusted to 30 µm, the probability of short circuit is basically 0%. That is, by increasing the thickness of the electrolyte layer 123, the electrolyte layer 123 forms a height difference between the first conductive layer 111 and the second conductive layer 131. When the thickness of the electrolyte layer 123 is not less than 30 µm, even if the first conductive layer and the second conductive layer are deformed and bent by extrusion, the short circuit will not be occurred, thereby the stability of the electrochromic device is improved.

As shown in FIGS. 4 to 7, in some embodiments, the first barrier structure and the second barrier structure can be the first barrier portion 160 and the second barrier portion 170, respectively.

The edge of the first conductive base 110 is provided with a first interval region, the edge of the electrochromic layer 120 is provided with two or more second interval regions, and the first interval region is communicated with at least one of the two or more second interval regions to form a first partition region 400, the first partition region 400 is arranged around the periphery of the first concave groove 140 at interval, to form a first barrier portion 160 between the first concave groove 140 and the first partition region 400.

It should be noted that the first interval region is formed by etching or laser cutting at the edge of the first conductive base 110. It can be understood that the first interval region is arranged around the periphery of the first accommodating groove at interval, and a first partition region is formed between the first interval region and the first accommodating groove. At the same time, the second interval region is arranged around the periphery of the first accommodating groove, and the second partition region is formed between the second interval region and the third accommodating groove, and the first partition region and the second partition region are the first barrier portion 160, so as to avoid a short circuit between the first conductive base 110 and the side of the second conductive base 130 adjacent to the electrochromic layer 120, or a short circuit between the side of the electrochromic layer 120 away from the second conductive base 130 and the side of the second conductive base 130 adjacent to the electrochromic layer 120 when the electrochromic device bends. Thus, the stability of electrochromic devices is improved.

In addition, the orthographic projection of the second accommodating groove on the plane where the electrochromic layer 120 is located overlaps with at least one third accommodating groove, and one second accommodating groove is communicated with one third accommodating groove to form one second concave groove 150.

Specifically, the orthographic projections of the first concave groove 140 and the second concave groove 150 on the plane where the electrochromic layer 120 is located are partially overlapped with each other or are spaced apart from each other. That is, the first concave groove 140 and the second concave groove 150 form an interlacing groove structure at the edge of the electrochromic layer 120.

At the same time, a third interval region is provided at the edge of the second conductive base 130, and the third interval region is communicated with the second interval region to form the second partition region 500, and the second partition region 500 is arranged around the periphery of the second concave groove 150 at interval, and the second barrier portion 170 is formed between the second concave groove 150 and the second partition region 500.

It should be noted that the third interval region is formed by etching or laser cutting at the edge of the second conductive base 130. It is understood that the third interval region is arranged around the periphery of the second accommodating groove at interval, and the third partition region is formed between the third interval region and the second accommodating groove. At the same time, the second partition region and the third partition region are the second barrier portion 170, so as to avoid a short circuit between the second conductive base 130 and the side of the first conductive base 110 adjacent to the electrochromic layer 120, or a short circuit between the side of the electrochromic layer 120 away from the first conductive base 110 and the side of the first conductive base 110 adjacent to the electrochromic layer 120 when the electrochromic device bends. Thus, the stability of electrochromic devices is improved.

It is understood that the material of the second barrier portion 170 includes the material of the second conductive base 130 and the material of the electrochromic layer 120.

In some embodiments of the present application, a plurality of first accommodating grooves and a plurality of second accommodating grooves are provided. It is understood that the number of the first accommodating grooves and the number of the second accommodating grooves can be two or more arbitrary numbers, which can be set according to the actual situation, so as to form a plurality of the first concave grooves and a plurality of the second concave grooves, and the first concave grooves are interleaved with the second concave grooves. In particular, the orthographic projection of any first concave groove 140 on the plane where the second conductive base 130 is located has a gap with each second concave groove 150. Thus the connection terminal of the external power supply can be connected with the first conductive base through the second concave groove, and the connection terminal of the external power supply can also be connected with the second conductive base through the first concave groove. Thus the connection terminal of the external power supply connected to the first conductive base is offset with the connection terminal of the external power supply connected to the second conductive base, so as to improve the safety and stability of the connection between the first conductive base and the second conductive base and the external power supply, and avoid short circuit.

In the embodiment, the plurality of first accommodating grooves are arranged at intervals on the edge of the first conductive base 110. Specifically, each side of the edge of the first conductive base 110 is provided with plurality of first accommodating grooves arranged at intervals.

The plurality of second accommodating grooves are arranged at intervals on the edge of the second conductive base 130. Specifically, each side of the edge of the second conductive base 130 is provided with a plurality of second accommodating grooves arranged at intervals. It should be noted that the orthographic projection of each second accommodating groove on the plane where the first conductive base 110 is located has a gap with each first accommodating groove.

In addition, the plurality of third accommodating groove are arranged at intervals on the edge of the electrochromic layer 120. Specifically, each side of the edge of the electrochromic layer 120 is provided with a plurality of third accommodating grooves arranged at intervals.

It is understood that in some embodiments of the present application, the sum of the number of first and second accommodating grooves is equal to the number of third accommodating grooves. The number of the first interval region and the third interval region can be matched with the number of the first and second concave grooves respectively, that is, they can be multiple to form a plurality of first partition regions and a plurality of second partition regions, thus, a plurality of the first barrier portion and a plurality of the second barrier portion can be formed.

It should be noted that, as shown in FIG. 4, the first direction and the second direction are perpendicular to each other. The first direction refers to the direction along the width direction of the non-visible area and perpendicular to the visible area, in a two-dimensional plane, for example, the first direction can be any one direction perpendicular to any side of the edge of the electrochromic device 100; the second direction refers to the direction perpendicular to the first direction, that is, the direction parallel to the visual area, in a two-dimensional plane, for example, the second direction can be any one direction parallel to any side of the edge of the electrochromic layer device 100. Specifically, relative to the upper and lower sides of the edge of the electrochromic device 100 (the upper and lower sides are parallel to each other the first direction is the direction perpendicular to the upper and lower sides, and the second direction is the direction parallel to the upper and lower sides; with respect to the left and right sides of the edge of the electrochromic device 100 (the left and right sides are parallel to each other), the first direction is the direction perpendicular to the left and right sides, and the second direction is the direction parallel to the left and right sides.

It can be seen from the above that, in some examples, when the upper and lower sides of the edge of the electrochromic device 100 and the left and right sides of the edge of the electrochromic device 100 are perpendicular to each other, the first and second directions located on different sides can be vertical relations respectively, that is, the first directions located on the upper and lower sides of the edge of the electrochromic device 100 can be perpendicular to the first direction of the left and right sides of the edge of the electrochromic device 100; the second direction on the upper and lower sides of the edge of the electrochromic device 100 can be perpendicular to the second direction on the left and right sides of the edge of the electrochromic device 100.

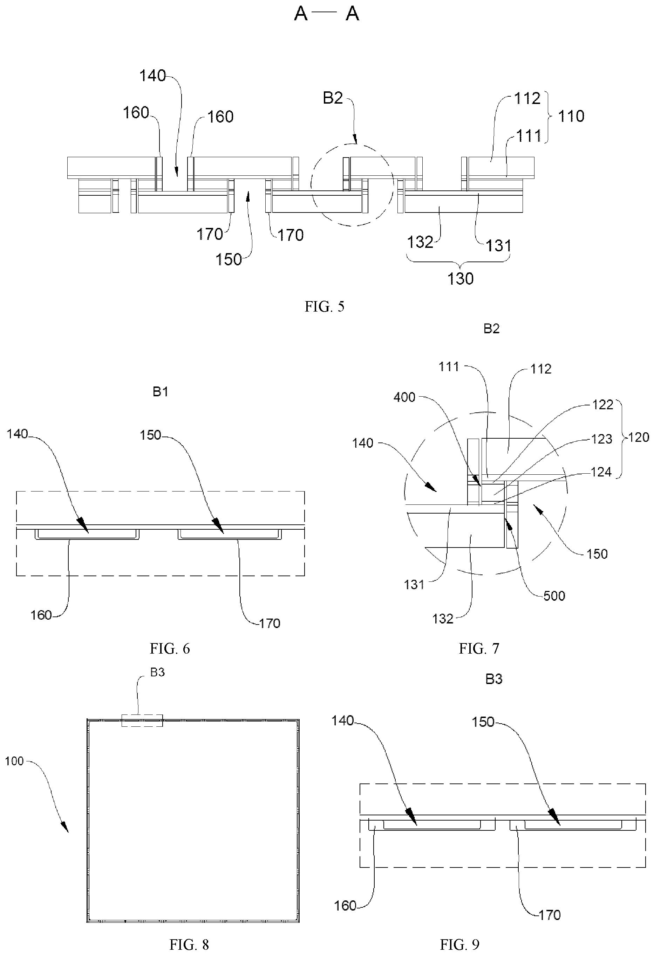

As shown in FIG. 6, FIG. 9, FIG. 11, FIG. 13 and FIG. 15, in some embodiments of the present application, the ratio of the width of the first barrier portion 160 along the first direction to the width of the first barrier portion 160 along the second direction is X1, and 0 < X1≤1. It is understood that X1 can be any value between 0 and 1, which can be set according to the actual situation.

For example, when the width of the first barrier portion 160 long the first direction is 1mm and the width of the first barrier portion 160 along the second direction is 2mm, then the X1 is 0.5.

When the width of the first barrier portion 160 along the first direction is 2mm and the width of the first barrier portion 160 along the second direction is 2mm, then the X1 is 1.

When the width of the first barrier portion 160 along the first direction is 1mm and the width of the first barrier portion 160 along the second direction is 10mm, then the X1 is 0.1.

When the width of the first barrier portion 160 along the first direction is 2mm and the width of the first barrier portion 160 along the second direction is 10mm, then the X1 is 0.2.

It should be noted that the ratio of the width of the first barrier portion 160 along the first direction to the width of the first barrier portion 160 along the second direction can be any one selected from a group of 0.01, 0.02, 0.04, 0.08, 0.1, 0.2, 0.3, 0.4, 0.5, 0.6, 0.7, 0.8, 0.9 and 1, which can be set according to the actual situation.

The width of the first barrier portion 160 along the first direction refers to a vertical distance along the first direction between the first concave groove and the first partition region from the side of the first barrier portion 160 away from the electrochromic layer 120 to the side of the first barrier portion 160 adjacent to the electrochromic layer 120. Here, for the purpose of limiting the size of the X value, the width along the first direction refers to the minimum width of the first barrier portion 160 along the first direction, that is, the vertical distance between the first barrier portion 160 extending from the side adjacent to the first concave groove along the first direction to the side adjacent to the visible area.

The width of the first barrier portion 160 along the second direction refers to a vertical distance along the second direction between the first concave groove and the first partition region from the side of the first barrier portion 160 away from the first concave groove 140 along the second direction to the side of the first barrier portion 160 adjacent to the first concave groove 140.

In addition, the width of the second barrier portion 170 along the first direction refers to a vertical distance along the first direction between the second concave groove and the second partition region from the side of the second barrier portion 170 away from the electrochromic layer 120 to the side of the second barrier portion 170 adjacent to the electrochromic layer 120. Here, for the purpose of limiting the size of the X value, the width along the first direction refers to the minimum width of the second barrier portion 170 along the first direction, that is, the vertical distance between the second barrier portion 170 extending from the side adjacent to the second concave groove along the first direction to the side adjacent to the visible area.

The width of the second barrier portion 170 along the second direction refers to a vertical distance along the second direction between the second concave groove and the second partition region from the side of the second barrier portion 170 away from the second concave groove 150 to the side of the second barrier portion 170 adjacent to the second concave groove 150.

In addition, the ratio of the width of the second barrier portion 170 along the first direction to the width of the second barrier portion 170 along the second direction is X2, and 0 < X2 ≤1. It is understood that X2 can be any value between 0 and 1, which can be set according to the actual situation.

For example, when the width of the first barrier portion 160 along the first direction is 2mm and the width of the first barrier portion 160 along the second direction is 2mm, and the X2 is 1.

When the width of the first barrier portion 160 along the first direction is 1mm and the width of the first barrier portion 160 along the second direction is 10mm, and the X2 is 0.1.

It should be noted that the ratio of the width of the second barrier portion 170 along the first direction to the width of the second barrier portion 170 along the second direction can be any one selected from a group of 0.01, 0.02, 0.04, 0.08, 0.1, 0.2, 0.3, 0.4, 0.5, 0.6, 0.7, 0.8, 0.9 and 1, which can be set according to the actual situation.

As shown in FIGS. 4 and 6, in some embodiments of the present application, the X1 is 0.5 when the width of the first barrier portion 160 along the first direction is 1mm and the width of the first barrier portion 160 along the second direction is 2mm , and the X2 is 0.5, when the width of the second barrier portion 170 along the first direction is 1mm, and the width of the second barrier portion 170 along the second direction is 10mm.

The X1 is 0.1, when the width of the first barrier portion 160 along the first direction is 1mm, and the width of the first barrier portion 160 along the second direction is 10mm. Similarly, the X2 is 0.1, when the width of the second barrier portion 170 along the first direction is 1mm, the width of the second barrier portion 170 along the second direction is 10mm.

It should be noted that by increasing the widths of the first barrier portion and the second barrier portion along the second direction, the contact area between the first barrier portion and the second conductive base is increased, and the contact area between the second barrier portion and the first conductive base is increased, so as to improve the stability of the first barrier portion on the second conductive base, and the stability of the second barrier portion on the first conductive base is improved so as to avoid the first barrier portion and/or the second barrier portion from falling off, and the first conductive base is prevented from contacting the second conductive base to form a short circuit, thus the use reliability and stability of the electrochromic device are improved.

In addition, when the width of the first barrier portion 160 along the first direction is 2mm and the width of the first barrier portion 160 along the second direction is 10mm, that is, the X1 is 0.2. When the width of the second barrier portion 170 along the first direction is 2mm, the width of the second barrier portion 170 along the second direction is 10mm, that is, the X2 is 0.2.

When the width of the first barrier portion 160 along the first direction is 4mm and the width of the first barrier portion 160 along the second direction is 20mm, the X1 is still 0.2. When the width of the second barrier portion 170 along the first direction is 4mm, and the width of the second barrier portion 170 along the second direction is 20mm, the X2 is still 0.2.

It should be noted that in some embodiments of the present application, the effective discoloration area of the electrochromic layer is increased by reducing the width of the first barrier along the first direction, thereby increasing the area of the visible area of the electrochromic device. At the same time, the width of the first barrier portion along the second direction is increased to increase the contact area between the first barrier portion and the second conductive base, so as to improve the stability of the first barrier portion on the second conductive base.

At the same time, the contacting the edge side of the first conductive base 110 with the second conductive base 130 is avoided, and/or, the contacting the edge side of the second conductive base 130 with the first conductive base 110 is avoided, and/or, the contacting the edge side of the first conductive base 110 with the edge side of the second conductive base 130 is avoided, so as to prevent the occurrence of short circuit to improve the stability and reliability of the electrochromic device.

In addition, in some embodiments of the present application, the orthographic projection of the first barrier portion 160 on the plane where the second conductive base 130 is located has a gap with the second barrier portion 170. It is understood that the first barrier portion 160 and the second barrier portion 170 form an interleaving barrier portion at the edge of the electrochromic device to prevent a short circuit between the first conductive base 110 and the second conductive base 130.

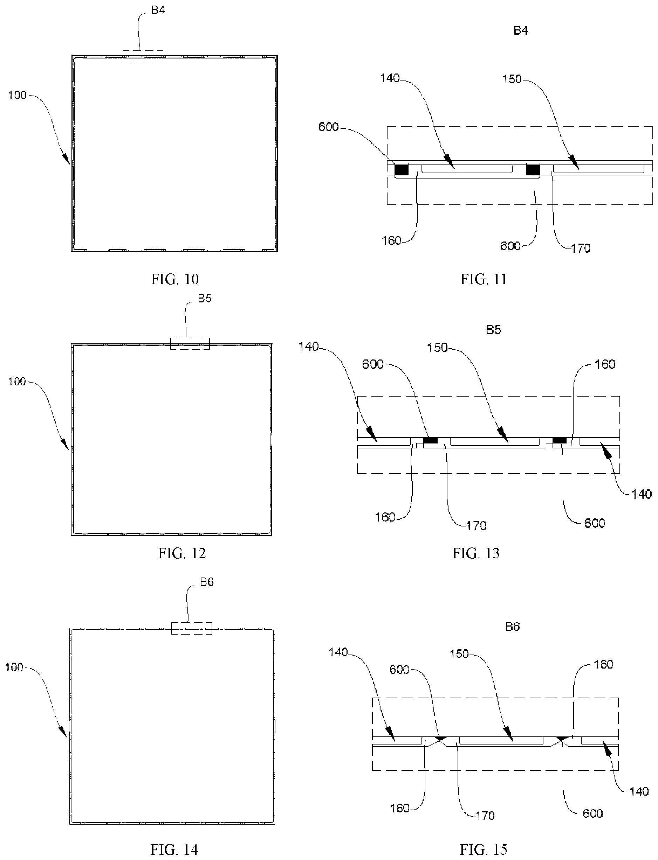

As shown in FIG. 10 to FIG. 15, in some embodiments of the present application, in order to improve the stability of the electrochromic device and avoid the short circuit, the orthographic projection of the first barrier portion 160 on the plane where the second conductive base 130 is located is partially overlapped with the second barrier portion 170 to form an overlapping area 600.

It should be noted that the orthographic projection of the overlapping area 600 on the plane where electrochromic layer 120 is located is located between the orthographic projections of the first concave groove 140 and the second concave groove 150 on the plane where electrochromic layer 120 are located, and the overlapping area 600 respectively form a gap with the first concave groove 140 and the second concave groove 150. So that the connection terminal of the external power supply connected to the first conductive base is offset with the connection terminal of the external power supply connected to the second conductive base, so as to improve the safety and stability of the connection between the first conductive base and the second conductive base and the external power supply.

In the embodiment, the ratio of the width of the overlapping area 600 along the first direction to the width of the first barrier portion 160 along the first direction is Y1, and 0 < Y1≤1. It is understood that Y1 can be any value between 0 and 1, which can be set according to the actual situation. It is understood that the ratio can be any one selected from a group of 0.01, 0.02, 0.04, 0.08, 0.1, 0.2, 0.3, 0.4, 0.5, 0.6, 0.7, 0.8, 0.9 and 1, which can be set according to the actual situation.

In addition, the ratio of the width of the overlapping area 600 along the first direction to the width of the second barrier portion 170 along the first direction is Y2, and 0 < Y2≤1. It is understood that Y2 can be any value between 0 and 1, which can be set according to the actual situation. It is understood that the ratio can be any one selected from a group of 0.01, 0.02, 0.04, 0.08, 0.1, 0.2, 0.3, 0.4, 0.5, 0.6, 0.7, 0.8, 0.9 and 1, which can be set according to the actual situation.

Specifically, the shape of the overlapping area 600 can be any one of a rectangle, a square, a triangle, an arc or an abnormity shape, which can be specified according to the actual situation.

It should be noted that the overlapping area 600 is an overlapping area formed by the first barrier portion 160 and the second barrier portion 170 along the second direction, and the width of the first barrier portion 160 or the second barrier portion 170 along the first direction is the maximum width of the first barrier portion 160 or the second barrier portion 170 along the first direction. That is, a vertical distance from the first barrier portion 160 or the second barrier portion 170 to the edge of the electrochromic device 100, extending in the first direction to the side adjacent to the visible area.

In some examples, the widths of the first barrier portion 160 and the second barrier portion 170 along the first direction can be different, i.e., Y1 Y2. In other examples, the difference between the widths of the first barrier portion 160 and the second barrier portion 170 along the first direction can be no less than 1mm or no less than 2mm.

Specifically, the vertical distance from the side of the overlapping area 600 away from the electrochromic layer 120 to the side of the first barrier portion 160 adj acent to the electrochromic layer 120 is greater than the vertical distance from the side of the overlapping area 600 away from the electrochromic layer 120 to the side of the second barrier portion 170 adjacent to the electrochromic layer 120. Alternatively, the vertical distance from the side of the overlapping area 600 away from the electrochromic layer 120 to the side of the first barrier portion 160 adjacent to the electrochromic layer 120 is less than the vertical distance from the side of the overlapping area 600 away from the electrochromic layer 120 to the side of the second barrier portion 170 adjacent to the electrochromic layer 120. Alternatively, the vertical distance from the side of the overlapping area 600 away from the electrochromic layer 120 to the side of the first barrier portion 160 adjacent to the electrochromic layer 120 is equal to the vertical distance from the side of the overlapping area 600 away from the electrochromic layer 120 to the side of the second barrier portion 170 adjacent to the electrochromic layer 120, which can be set according to the actual situation.

By adjusting the width of the overlapping region 600 along the first direction and the second direction, the discoloration region of the electrochromic device 100 is increased, the contact between the edge side of the first conductive base 110 and the second conductive base 130 is avoided, and/or the contact between the edge side of the second conductive base 130 and the first conductive base 110 is avoided, so as to improve the stability of the electrochromic device.

As shown in FIGS. 10 and 11, in some embodiments of the present application, the vertical distance from the side of the overlapping area 600 away from the electrochromic layer 120 to the side of the first barrier portion 160 adjacent to the electrochromic layer 120 is greater than the vertical distance from the side of the overlapping area 600 away from the side of the electrochromic layer 120 to the side of the second barrier portion 170 adjacent to the electrochromic layer 120, so as to avoid when the electrochromic device is bent along the first direction, the first conductive base and the second conductive base contacting to occur a short circuit. At the same time, it is ensured that the overlapping area includes a part of the first barrier portion and a part of the second barrier portion to avoid short circuit on the side of the electrochromic device, so as to improve the stability between the first conductive base and the second conductive base. In this case, the Y1 is less than the Y2, and the Y2 is equal to 1.

It is understood that, along the first direction, the width of the overlapping region 600 is equal to the vertical distance from the side of the overlapping region 600 away from the electrochromic layer 120 to the side of the second barrier portion 170 adjacent to the electrochromic layer 120.

Alternatively, the vertical distance from the side of the overlapping area 600 away from the electrochromic layer 120 to the side of the first barrier portion 160 adj acent to the electrochromic layer 120 is less than the vertical distance from the side of the overlapping area 600 away from the electrochromic layer 120 to the side of the second barrier portion 170 adjacent to the electrochromic layer 120. In this case, the Y1 is less than the Y2, and the Y1 is equal to 1, which can be set according to the actual situation.

As shown in FIGS. 12 and 13, in some embodiments of the present application, the vertical distance from the side of the overlapping area 600 away from the electrochromic layer 120 to the side of the first barrier portion 160 adjacent to the electrochromic layer 120 is equal to the vertical distance from the side of the overlapping area 600 away from the electrochromic layer 120 to the side of the second barrier portion 170 adjacent to the electrochromic layer 120.

In the embodiment, the orthographic projection of the side of the first barrier portion 160 along the second direction on the plane where the electrochromic layer 120 is located is in a "L" shape, and partially overlaps with the orthographic projection of the second barrier portion 170 on the plane where the electrochromic layer 120 is located. In addition, the orthographic projection of the side of the second barrier portion 170 along the second direction on the plane where the electrochromic layer 120 is located is in a "L" shape, and partially overlaps with the orthographic projection of the first barrier portion 160 on the plane where the electrochromic layer 120 is located, and the side of the first barrier portion 160 along the second direction has a gap with the side of the second barrier portion 170 along the second direction. Under the condition that the width of the overlapping area 600 along the second direction remains unchanged, the width of overlapping area 600 along the first direction is reduced, which not only avoids the short circuit of the side of the first conductive base 110 and the side of the second conductive base 130, but also increases the discoloration area of the electrochromic layer 120, thereby improving the discoloration area of the electrochromic device.

As shown in FIG. 14 and FIG. 15, in some embodiments of the present application, in order to simplify the cutting process of the electrochromic device and make the cutting patterns on both sides more symmetrical, the overlapping area 600 formed by orthographic projections of the first barrier portion 160 and the second barrier portion 170 on the plane where the electrochromic layer 120 is located is an isosceles triangle structure or an equilateral triangle structure. The aesthetics after cutting is improved, and the aesthetics of electrochromic devices in the process of changing color is improved.

It is understood that the Y1 is equal to the Y2, and both the Y1 and the Y2 are less than 1.

It should be noted that in some embodiments of the present application, for the stability of the electrochromic device, the edge of the first barrier portion 160 and the edge of the second barrier portion 170 are arranged as a fillet structure to avoid right-angle tip discharge and to improve the stability of the electrochromic device.

In addition, in order to avoid busbars connected to the first conductive base and the second conductive base respectively when cutting or etching along the second direction, in some embodiments of the present application, the width of the overlapping area along the first direction is not less than the width of the busbar. It should be noted that the width of the busbar mentioned here refers to the width along the first direction of the overlapping area between the orthographic projection of the busbar on the plane where the electrochromic layer is located and the electrochromic layer, so as to improve the stability of the etching or cutting process of the first conductive base and the second conductive base, and to improve the quality of the electrochromic device.

In some embodiments of the present application, the ratio of the width of the overlapping area 600 along the second direction to the width of the first barrier portion 160 along the second direction is Z1, and 0 < Z1 < 1. It is understood that Z1 can be any value between 0 and 1, which can be set according to the actual situation. Specifically, the ratio can be any one selected from a group of 0.01, 0.02, 0.04, 0.08, 0.1, 0.2, 0.3, 0.4, 0.5, 0.6, 0.7, 0.8, 0.9, and 1.

The ratio of the width of the overlapping area 600 along the second direction to the width of the second barrier portion 170 along the second direction is Z2, and 0 < Z2 < 1. It is understood that Z2 can be any value between 0 and 1, which can be set according to the actual situation. Specifically, the ratio can be any one selected from a group of 0.01, 0.02, 0.04, 0.08, 0.1, 0.2, 0.3, 0.4, 0.5, 0.6, 0.7, 0.8, 0.9, and 1.

For example, when the gap between the orthographic projections of any adjacent first concave groove and the second concave groove on the plane where the electrochromic layer is located is 30mm, the maximum width of the overlapping region along the second direction is 26mm. In this case, the widths of the first barrier portion and the second barrier portion along the second direction are 28mm, so that the gap between the first concave grooves adjacent to the first barrier portion is 2mm, and the gap between the second concave grooves adjacent to the second barrier portion is 2mm, so as to avoid the sides of the first conductive base and the side of the second conductive base from contacting and to avoid the occurrence of a short circuit, the stability of the electrochromic device is improved.

It can be understood that when the gap between the orthographic projections of any adjacent first and second concave grooves on the plane where the electrochromic layer is located is 30mm, the width of the overlapping area along the second direction is greater than 0mm and not greater than 26mm, which can be specified according to the actual situation.

In some embodiments of the present application, the difference between the width of the first barrier portion 160 along the second direction and the width of the overlapping region 600 along the second direction is not less than 2mm in order to increase the discoloration region of the electrochromic layer 120 while preventing a short circuit of the electrochromic device.

It is understood that the difference between the width of the first barrier portion 160 along the second direction and the width of the second barrier portion 170 along the second direction is 2mm. Alternatively, the difference between the width of the first barrier portion 160 along the second direction and the width of the second barrier portion 170 along the second direction is greater than 2mm. In this case, by adjusting the width of the second barrier portion 170 along the second direction to adjust the width of the overlapping area 600 along the second direction, so as to more effectively avoid the edge of the first conductive base 110 contacting with the second conductive base 130, while avoiding the edge of the second conductive base 130 contacting with the first conductive base 110, to prevent the occurrence of short circuit and improve the stability and reliability of the electrochromic device.

Similarly, in some embodiments of the present application, the difference between the width of the second barrier portion 170 along the second direction and the width of the overlapping area 600 along the second direction is not less than 2mm.

In some embodiments of the present application, the edge of the first conductive layer 111 is provided with a plurality of first avoidance grooves, the first avoidance groove is the first interval region. Specifically, one first avoidance groove and one third accommodating groove form one first partition region 400.

It is understood that first partition regions 400 are spaced apart around the periphery of the first concave groove 140 in a ring; a first barrier portion 160 is formed between the first partition region 400 and the first concave groove 140, where the first barrier portion 160 is a non-conductive first conductive layer 111 and a partial electrochromic layer. The first barrier portion 160 is used to prevent the occurrence of short circuit between the first conductive layer 111 and the second conductive layer 131.

At the same time, the edge of the second conductive layer 131 is provided with a plurality of second avoidance grooves, and the second avoidance groove is the third interval region. Specifically, one second avoidance groove and one third accommodating groove form one second partition region 500.

It is understood that by etching a second avoidance groove at the edge of the second conductive layer 131, the second partition regions 500 are spaced apart around the periphery of the second concave groove 150 in a ring, and a second barrier portion 170 is formed between the second partition region 500 and the second concave groove 150. The second barrier portion 170 is a non-conductive second conductive layer 131 and partial electrochromic layer, and the second barrier portion 170 prevents the occurrence of short circuit between the second conductive layer 131 and the first conductive layer 111 to improve the stability of the electrochromic device.

In some embodiments of the present application, in order to improve the stability of the electrochromic device and prevent the occurrence of short circuit, the first partition region 400 and the second partition region 500 are filled with an insulating adhesive. The insulating adhesive separates the first conductive base 110 from the second conductive base 130 while providing support to the first barrier portion 160 and the second barrier portion 170, so as to avoid the occurrence of short circuit between the first conductive base 110 and the second conductive base 130 during the deformation of the electrochromic device under pressure. The stability of the first conductive base 110 and the second conductive base 130 is improved to improve the stability of the electrochromic device.

It should be noted that in order to improve the supporting effect of the first barrier portion 160 and the second barrier portion 170, the ratio between the vertical distance from the first etching area adjacent to the first barrier portion 160 to the side of the first etching area away from the first barrier portion 160 to the width of the first barrier portion ranges from 0.02 to 0.5. It can be any one selected from a group of 0.02, 0.03, 0.04, 0.05, 0.06, 0.07, 0.08, 0.09, 0.1, 0.2, 0.3, 0.4, and 0.5.

In addition, the ratio between the vertical distance from the side of the second etching area adjacent to the second barrier portion 170 to the side of the second etching area away from the second barrier portion 170 to the width of the second barrier ranges from 0.02 to 0.5. It can be any one selected from a group of 0.02, 0.03, 0.04, 0.05, 0.06, 0.07, 0.08, 0.09, 0.1, 0.2, 0.3, 0.4, and 0.5, which can be set according to the actual situation.

In other embodiments of the present application, as shown in FIGS. 7 and 8, the first barrier structure is the first insulating portion, the first insulating portion200 is attached to the inner wall of the first concave groove 140, and the first insulating portion 200 is located on the side of the second conductive base 130 adjacent to the electrochromic layer 120.

Specifically, the first insulating portion 200 is attached to the periphery of the inner wall of the first concave groove 140, and the first insulating portion is used to prevent the occurrence of short circuit between the first conductive layer and the second conductive layer when the electrochromic device is deformed under pressure.

In addition, the second barrier structure is a second insulating portion 300, in which the second insulating portion 300 is attached to the inner wall of the second concave groove 150, and the second insulating portion 300 is located on the side of the first conductive base 110 adjacent to the electrochromic layer 120.

Specifically, the second insulating portion 300 is attached to the periphery of the inner wall of the second concave groove 150, and the second insulating portion is used to prevent the occurrence of short circuit between the first conductive layer and the second conductive layer when the electrochromic device is deformed under pressure.

It should be noted that the first insulating portion 200 and the second insulating portion 300 are insulating materials.

In order to further improve the insulation quality of the first insulating portion and the second insulating portion and prevent the occurrence of short circuit between the first conductive base and the second conductive base, the vertical distance from the side of the first insulating portion away from the inner wall of the first concave groove 140 to the inner wall of the first concave groove 140 is not less than the first threshold range. It should be noted that the vertical distance from the side of the first insulating portion 200 away from the inner wall of the first concave groove 140 to the inner wall of the first concave groove 140 is greater than the sum of the thickness of the first conductive layer 111 and the deformation width of the first conductive layer 111.

It should be noted that the deformation width of the first conductive layer 111 refers to the displacement distance of the first conductive layer 111 in the inner wall of the first concave groove 140 when the electrochromic layer 120 is deformed under pressure.

In addition, the vertical distance from the side of the second insulating portion 300 away from the inner wall of the second concave groove 150 to the inner wall of the second concave groove 150 is not less than the first threshold range. The vertical distance from the side of the second insulating portion 300 away from the inner wall of the second concave groove 150 to the inner wall of the second concave groove 150 is greater than the sum of the thickness of the second conductive layer 131 and the deformation width of the second conductive layer 131.

Specifically, the first threshold ranges from 0.45 to 0.5mm, which can be any of 0.45mm, 0.46mm, 0.47mm, 0.48mm, 0.49mm, and 0.5mm.

It should be noted that the deformation width of the second conductive layer 131 refers to the displacement distance of the second conductive layer 131 in the inner wall of the second concave groove 150 when the electrochromic layer 120 is deformed under pressure.

Preferably, in order to further improve the stability between the first conductive layer and the second conductive layer, the vertical distance from the side the first insulating portion 200 away from the inner wall of the first concave groove 140 to the inner wall of the first concave groove 140 is not less than 0.5 mm, and the vertical distance from the side of the second insulating portion 300 away from the inner wall of the second concave groove 150 to the inner wall of the second concave groove 150 is not less than 0.5 mm.

Specifically, the vertical distance from the side of the first insulating portion 200 away from the inner wall of the first concave groove 140 to the inner wall of the first concave groove 140 is less than half the width of the first concave groove 140, and the vertical distance from the side of the second insulating portion 300 away from the inner wall of the second concave groove 150 to the inner wall of the second concave groove 150 is less than half the width of the second concave groove 150.

In some embodiments of the present application, the edge of the first conductive layer 111 is provided with a first avoidance groove , and the first avoidance groove is the first barrier structure.

At the same time, the edge of the second conductive layer 131 is provided with a second avoidance groove, and the second avoidance groove is the second barrier structure.

The edge of the electrochromic material layer 122 is provided with a third avoidance groove, and the edge of the ion storage layer 124 is provided with a fourth avoidance groove.

In the embodiment, the orthographic projection of the third avoidance groove on the plane where the first conductive layer is located coincides with the first avoidance groove, and the first avoidance groove is communicated with the third avoidance groove to form the first etching area 180. It should be noted that one third avoidance groove is communicated with one first avoidance groove to form one first etching area 180.

In addition, the orthographic projection of the fourth avoidance groove on the plane where the second conductive layer 131 is located coincides with the second avoidance groove, and the second avoidance groove is communicated with the fourth avoidance groove to form the second etching area 190. It should be noted that one fourth avoidance groove is communicated with one second avoidance groove to form one second etching area 190.

Specifically, the number of third avoidance grooves is equal to the number of first avoidance grooves, the number of fourth avoidance grooves is equal to the number of second avoidance grooves, and the first etching area 180 and the second etching area 190 are interleaved.

As shown in FIGS. 5 and 6, in some embodiments of the present application, the first etching area 180 is located on the inner wall of the first concave groove 140, and the second etching area 190 is located on the inner wall of the second concave groove 150.

It is understood that the first avoidance groove is located in the periphery of the inner wall of the first concave groove 140, and that the vertical distance from the side of the first avoidance groove away from the electrochromic layer 120 to the side of first avoidance groove adjacent to the electrochromic layer 120 is equal to the thickness of the first conductive layer 111.

It should be noted that the second avoidance groove is located in the periphery of the inner wall of the second concave groove 150, and the vertical distance from the side of the second concave groove away from the electrochromic layer 120 to the side of the second avoidance groove adjacent to the electrochromic layer 120 is equal to the thickness of the second conductive layer 131.

In the embodiment, the first avoidance groove can be formed by etching on the first conductive layer 111 on the inner wall of the first concave groove 140, and the second avoidance groove can be formed by etching on the second conductive layer 131 on the inner wall of the second concave groove 150.

It is understood that the third avoidance groove is arranged on the inner wall of the first concave groove 140, and that the third avoidance groove is located on the edge of the electrochromic material layer 122. It should be noted that the vertical distance from the side of the third avoidance groove away from the electrolyte layer 123 to the side of the third avoidance groove adjacent to the electrolyte layer 123 is equal to the thickness of the electrochromic material layer 122, and the orthographic projection of the third avoidance groove on the plane where the first conductive layer 111 is located coincides with the first avoidance groove, and the first avoidance groove is communicated with the third avoidance groove to form the first etching area 180.

Specifically, the vertical distance from the side of the first etching area 180 away from the electrolyte layer 123 to the side of the first etching area 180 adjacent to the electrochromic layer 120 is equal to the sum of the thickness of the electrochromic material layer 122 and the first conductive layer 111.

In addition, the fourth avoidance groove is arranged on the inner wall of the second concave groove 150, and the fourth avoidance groove is located on the edge of the electrochromic material layer 122. It should be noted that the vertical distance from the side of the fourth avoidance groove away from the electrolyte layer 123 to the side of the fourth avoidance groove adjacent to the electrolyte layer 123 is equal to the thickness of the ion storage layer 124, and the orthographic projection of the fourth avoidance groove on the plane where the second conductive layer 131 is located coincides with the second avoidance groove. The second avoidance groove is communicated with the fourth avoidance groove to form a second etching area 190.

It is understood that the vertical distance from the side of the second etching area 190 away from the electrolyte layer 123 to the side of the second etching area 190 adjacent to the electrochromic layer 120 is equal to the sum of the thickness of the electrochromic material layer 122 and the second conductive layer 131.

In this case, the first etching area 180 is communicated with the first concave groove, and the second etching area 190 is communicated with the second concave groove. By the first etching area 180 and the second etching area 190, the first conductive layer 111 is prevented from contacting with the second conductive layer 131 to form a short circuit, when the electrochromic device is deformed.

As shown in FIGS. 9 and 10, in some embodiments of the present application, the orthographic projection of the first etching area 180 on the plane where the second conductive base 130 is located is located around the first concave groove 140 at interval. The orthographic projection of the second etching area 190 on the plane where the first conductive base 110 is located is located around the second concave groove 150 at interval.

It should be noted that the orthographic projection of the first etching area 180 on the plane where the second conductive base 130 is located is in a shape of a Chinese character " 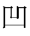 ", and is arranged around the first concave groove 140 at interval. It is understood that the first etching area 180 is arranged apart from the first concave groove 140.

The first conductive layer 111 and electrochromic material layer 122 are etched to form a non-conductive portion through the first etching area 180, that is, the first conductive layer 111 and electrochromic material layer 122 located between the first concave groove 140 and the first etching area 180 are non-conductive portions, so as to prevent the first conductive layer 111 from contacting with the second conductive layer 131 to form a short circuit when the electrochromic device is compressed to be deformed, to improve the stability of the electrochromic device.

The orthographic projection of the second etching area 190 on the plane where the first conductive base 110 is located is in a shape of a Chinese character " 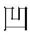 ", and is arranged around the first concave groove 140 at interval. It is understood that the second etching area 190 is arranged apart from the second concave groove 150.

At the same time, the second conductive layer 131 and ion storage layer 124 are etched through the second etching area 190 to form a non-conductive portion, that is, the second conductive layer 131 and ion storage layer 124 located between the second concave groove 150 and the second etching area 190 are non-conductive portions, so as to prevent the first conductive layer 111 from contacting with the second conductive layer 131 to form a short circuit when the electrochromic device is compressed to be deformed, to improve the stability of the electrochromic device.

In addition, in some other embodiments of the present application, the first etching area 180 further includes a portion etching to the side of the first base layer 112 adjacent to the first conductive layer 111, and the second etching area 190 further includes a portion etching to the side of the second base layer 132 adjacent to the second conductive layer 131.

It should be noted that the orthographic projection of the etching area on the first base layer 112 on the plane where the first conductive layer 111 is located coincides with the first avoidance groove, and the vertical distance from the side of the etching area on the first substrate 112 adjacent to the first conductive layer 111 to the side away from the first conductive layer 111 is less than the thickness of the first base layer 112. Similarly, the orographic projection of the etching area on the second base layer 132 on the plane where the second conductive layer 131 is located coincides with the second avoidance groove, and the vertical distance from the side of the etching area on the second base layer 132 adjacent to the second conductive layer 131 and the side away from the second conductive layer 131 is less than the thickness of the second base layer 132.

In order to further improve the stability of the electrochromic device, the first etching area 180 and the second etching area 190 are filled with the insulating adhesive respectively, and the first conductive layer and the electrochromic material layer are separated from the second conductive layer by the insulating adhesive, and the second conductive layer and the ion storage layer are separated from the first conductive layer by the insulating adhesive. Thus, when the electrochromic device is compressed and deformed, the first conductive layer is avoided to contact with the second conductive layer to form a short circuit, so as to improve the stability of the electrochromic device.

It should be noted that in some embodiments of the present application, non-solid electrolytes can also be filled in the first etching area 180 and the second etching area 190, and after the non-solid electrolytes are cured, an insulating layer is formed in the first etching area and the second etching area respectively, and the insulating layer is used to prevent the occurrence of short circuit between between the first conductive layer and the second conductive layer. Thus, the stability of electrochromic devices is improved.

In the embodiment, the vertical distance from the side the first etching area 180 away from the first conductive layer 111 to the side of the first etching area 180 adjacent to the first conductive layer 111 is 0.1 ~ 2mm. The vertical distance from the side of the second etching region 190 away from the second conductive layer 131 to the side of the second etching region 190 adjacent to the second conductive layer 131 is 0.1 ~ 2mm. The distance can be any one selected from a group of 0.1mm, 0.2mm, 0.3mm, 0.4mm, 0.5mm, 0.6mm, 0.7mm, 0.8mm, 0.9mm, 1mm, 1.1mm, 1.2mm, 1.3mm, 1.4mm, 1.5mm, 1.6mm, 1.7mm, 1.8mm, 1.9mm, and 2mm.

In further embodiments of the present application, the first barrier structure is the first insulating portion arranged on the inner wall of the first concave groove 140, and the first insulating portion is at least partially covered on the electrochromic layer 120. It is understood that the first insulating portion is partially covered on the electrochromic layer 120, or the first insulating portion is covered on the electrochromic layer 120.

At the same time, the second barrier structure is a second insulating portion arranged on the inner wall of the second concave groove 150, and the second insulating portion is at least partially covered on the electrochromic layer 120. It is understood that the second insulating portion is partially covered on the electrochromic layer 120, or the second insulating portion is covered on the electrochromic layer 120.

The first insulating portion and the second insulating portion can all be the insulating adhesive.

In addition, the first insulating portion and the second insulating portion can be electrochromic stacked layers of a certain width that are not removed as reserved in the existing preparation process, for example, the electrolyte layer 123 and the electrochromic material layer 122, or the electrolyte layer 123 and the ion storage layer 124.

It should be noted that when the first insulating portion is partially covered on the electrochromic layer 120 and the second insulating portion is partially covered on the electrochromic layer 120, the first insulating portion can be the electrolyte layer 123 and the ion storage layer 124, and the second insulating portion is the electrolyte layer 123 and the electrochromic material layer 122. Alternatively, the first insulating portion can also be an electrolyte layer 123 and an electrochromic material layer 122, and the second insulating portion is an electrolyte layer 123 and an ion storage layer 124. The material of the first insulating portion and the second insulating portion can be specifically arranged according to the actual situation, and when the first conductive layer 111 and/or the second conductive layer 131 are deformed and bent, the first insulating portion and the second insulating portion form a barrier between the first conductive layer and the second conductive layer to avoid short circuit, thereby improving the stability of the electrochromic device.

In further embodiments of the present application, a first conductive segment is provided on the surface of the first conductive layer 111, and the first conductive segment is located in the second concave groove 150, and a gap is formed between the first conductive segment and the inner wall of the second concave groove 150. At the same time, a second conductive segment is arranged on the surface of the second conductive layer 131, and the second conductive segment is located in the first concave groove 140, and a gap is formed between the second conductive section and the inner wall of the first concave groove 140.

Specifically, the first conductive segment is electrically connected with the first busbar, and the external power supply is electrically connected with the first busbar, thus, the conductive outlet of the multiple electrodes is formed on the second conductive layer. At the same time, the second conductive segment is electrically connected with the second busbar, and the external power supply is electrically connected with the second busbar, thus, the conductive outlet of the multiple electrodes is formed on the first conductive layer.

In addition, an electrical connection between multiple electrodes can be formed through the metal foil by means of metal foil coating, and the conductive outlet of the conductive layer can be formed by connecting the external power supply through the metal foil. Specifically, the edge of the second conductive base away from the electrochromic layer is provided with a first busbar, through the second concave groove, the first busbar is electrically connected with the first conductive base through the first conductive adhesive, so as to form the conductive outlet of the multi electrodes on the second conductive layer.

At the same time, a second busbar is arranged on the edge of the first conductive base away from the electrochromic layer. Through the first concave groove, the second busbar is electrically connected with the second conductive base through the second conductive adhesive, so as to form the conductive outlet of the multi electrodes on the first conductive layer.

Thus, by connecting the first busbar and the second busbar to the external power supply, and forming an electric field inside the electrochromic device, the ions or electrons in the electrochromic layer are embedded or unembedded to achieve apparent color change or transmittance change of the electrochromic device.

In all examples shown and described here, any specific value should be interpreted as merely exemplary and not as a limitation, so that other examples of exemplary embodiments may have different values.

It should be noted that similar labels and letters indicate similar items in the drawings below, so that once an item is defined in one of the drawings, it does not need to be further defined and explained in subsequent drawings.

The above embodiments express only several embodiments of the present application, which are more specific and detailed in their description, but are not to be construed as limiting the scope of the present application. It should be noted that for those skilled in the art, without deviating from the concept of the present application, a number of deformation and improvement can be made, which are within the scope of protection of the present application.

## Claims

1. An electrochromic device, comprising: a first conductive base, an electrochromic layer and a second conductive base sequentially laminated;
wherein an edge of the first conductive base is provided with a first accommodating groove, an edge of the second conductive base is provided with a second accommodating groove, and an edge of the electrochromic layer is provided with two or more third accommodating grooves;
wherein an orthographic projection of the first accommodating groove on a plane where the electrochromic layer is located overlaps with the third accommodating grooves, and the first accommodating groove is communicated with at least one of the third accommodating grooves to form a first concave groove;
wherein an orthographic projection of the second accommodating groove on the plane where the electrochromic layer is located overlaps with the third accommodating grooves, and the second accommodating groove is communicated with at least one of the third accommodating grooves to form a second concave groove; and
wherein the edge of the second conductive base is provided with a first barrier structure, and the edge of the first conductive base is provided with a second barrier structure.

2. The electrochromic device according to claim 1, wherein a plurality of first accommodating grooves and a plurality of second accommodating grooves are respectively arranged to form a plurality of first concave grooves and a plurality of second concave grooves, and the first concave grooves and the second concave grooves are arranged in a staggered manner.

3. The electrochromic device according to claim 1 or 2, wherein the first barrier structure is a first barrier portion and the second barrier structure is a second barrier portion, and
wherein the edge of the first conductive base is provided with a first interval region, the edge of the electrochromic layer is provided with two or more second interval regions, the first interval region is communicated with at least one of the second interval regions to form a first partition region, and the first partition region is arranged surrounding a periphery of the first concave groove at interval, so as to form the first barrier portion between the first concave groove and the first partition region; and
wherein the edge of the second conductive base is provided with a third interval region, the third interval region is communicated with at least one of the second interval regions to form a second partition region, and the second partition region is arranged surrounding a periphery of the second concave groove at interval, so as to form the second barrier portion between the second concave groove and the second partition region.

4. The electrochromic device according to claim 3, wherein a gap is provided between an orthographic projection of the first concave groove on a plane where the second conductive base is located and the second concave groove.

5. The electrochromic device according to claim 3, wherein an orthographic projection of the first barrier portion on a plane where the second conductive base is located is partially overlapped with the second barrier portion, to form an overlapping area.

6. The electrochromic device according to claim 5, wherein a ratio of a width of the first barrier portion in a first direction to a width of the first barrier portion in a second direction is X1, and 0 < X1≤1; and
a ratio of a width of the second barrier portion along the first direction to a width of the second barrier portion along the second direction is X2, and 0<X2≤1;
wherein the width along the first direction is a minimum width of the first barrier portion or the second barrier portion along the first direction.

7. The electrochromic device according to claim 5, wherein a ratio of a width of the overlapping area in a first direction to a width of the first barrier portion along the first direction is Y1, and 0 < Y1≤1; and
a ratio of the width of the overlapping area along the first direction to a width of the second barrier portion along the first direction is Y2, and 0<Y2≤1;
wherein the overlapping area is an overlapping area formed by the first barrier portion and the second barrier portion along the second direction, and the width of the first barrier portion or the second barrier portion along the first direction is a maximum width of the first barrier portion or the second barrier portion along the first direction.

8. The electrochromic device according to claim 5, wherein a ratio of a width of the overlapping area in a second direction to a width of the first barrier portion along the second direction is Z1, and 0<Z1<1; and/or
a ratio of the width of the overlapping area along the second direction to the width of the second barrier portion along the second direction is Z2, and 0<Z2<1.

9. The electrochromic device according to claim 5, wherein a difference between a width of the first barrier portion in a second direction and a width of the overlapping area along the second direction is not less than 2mm; and/or
a difference between a width of the second barrier portion along the second direction and the width of the overlapping area along the second direction is not less than 2mm.

10. The electrochromic device according to any one of claims 6-9, wherein the first direction is a width direction of a non-visible area and is perpendicular to a visible area, and the second direction is perpendicular to the first direction and is parallel to the visible area.

11. The electrochromic device according to claim 1 or 2, wherein the first barrier structure is a first insulating portion, the first insulating portion is attached to an inner wall of the first concave groove, and the first insulating portion is located on a side of the second conductive base adjacent to the electrochromic layer; and
the second barrier structure is a second insulating portion, the second insulating portion is attached to an inner wall of the second concave groove, and the second insulating portion is located on a side of the first conductive base adjacent to the electrochromic layer.

12. The electrochromic device according to claim 11, wherein a vertical distance from a side of the first insulating portion away from the inner wall of the first concave groove to the inner wall of the first concave groove is not less than a first threshold range; and
a vertical distance from a side of the second insulating portion away from the inner wall of the second concave groove to the inner wall of the second concave groove is not less than a first threshold range;
wherein the first threshold range ranges from 0.45mm to 0.5mm.

13. The electrochromic device according to claim 1 or 2, wherein the first conductive base comprises a first conductive layer and a first base layer laminated to each other, and the first base layer is laminated on a side of the first conductive layer away from the electrochromic layer; and
the second conductive base comprises a second conductive layer and a second base layer laminated to each other, and the second base layer is laminated on a side of the second conductive layer away from the electrochromic layer;
wherein the electrochromic layer comprises an electrochromic material layer, an electrolyte layer and an ion storage layer sequentially laminated.

14. The electrochromic device according to claim 13, wherein an edge of the first conductive layer is provided with a first avoidance groove, an edge of the second conductive layer is provided with a second avoidance groove, the first avoidance groove is the first barrier structure, and the second avoidance groove is the second barrier structure;
an edge of the electrochromic material layer is provided with a third avoidance groove, and an edge of the ion storage layer is provided with a fourth avoidance groove;
an orthographic projection of the third avoidance groove on a plane where the first conductive layer is located coincides with the first avoidance groove, and the first avoidance groove is communicated with the third avoidance groove to form a first etching area; and
an orthographic projection of the fourth avoidance groove on a plane where the second conductive layer is located coincides with the second avoidance groove, and the second avoidance groove is communicated with the fourth avoidance groove to form a second etching area.

15. The electrochromic device according to claim 14, wherein an orthographic projection of the first etching area on a plane where the second conductive base is located is located on a periphery of the first concave groove at an interval, and an orthographic projection of the second etching area on a plane where the first conductive base is located is located on a periphery of the second concave groove at an interval.

16. The electrochromic device according to claim 15, wherein the first etching area and the second etching area are filled with an insulating adhesive.

17. The electrochromic device according to claim 13, wherein at least one of a hardness of the first conductive layer and a hardness of the second conductive layer is not less than a first hardness value.

18. The electrochromic device according to claim 13, wherein a gap is provided between an orthographic projection of the first accommodating groove on a plane where the second conductive base is located and the second accommodating groove, and the first hardness value is 3H.

19. The electrochromic device according to claim 13, wherein an orthographic projection of the first accommodating groove on a plane where the second conductive base is located overlaps with the second accommodating groove, and the first hardness value is 5H.

20. The electrochromic device according to claim 13, wherein a thickness of the electrolyte layer is not less than a sum of a bending height of a side of the first conductive layer adjacent to the first concave groove and a bending height of a side of the second conductive layer adjacent to the second concave groove.
